# EUROPÄISCHE PATENTSCHRIFT

(11) **EP 2 220 466 B1**
(45) Veröffentlichungstag und Bekanntmachung des Hinweises auf die Patenterteilung: **11.11.2015**
(21) Anmeldenummer: 08856610.4
(22) Anmeldetag: 12.11.2008
(51) Int. Cl.: G01G 15/00

(54) **WÄGEVORRICHTUNG MIT EINER MEHRZAHL DIGITALER WÄGEZELLEN, WÄGEZELLE UND VERFAHREN**
WEIGHING DEVICE HAVING A PLURALITY OF DIGITAL WEIGHING CELLS, WEIGHING CELL, AND METHOD
DISPOSITIF DE PESAGE AVEC UNE PLURALITÉ DE CELLULES DE PESAGE NUMÉRIQUES, CELLULE DE PESAGE ET PROCÉDÉ

(30) Priorität: 05.12.2007 DE 102007058919
(43) Veröffentlichungstag der Anmeldung: 25.08.2010
(73) Patentinhaber: Sartorius Lab Instruments GmbH & Co. KG, 37075 Göttingen (DE)
(72) Erfinder: KLAUER, Alfred, 37083 Göttingen (DE); OLDENDORF, Christian, 37077 Göttingen (DE); SCHINK, Thomas, 37077 Göttingen (DE); BETTWIESER, Erich, 37083 Göttingen (DE)
(86) Internationale Anmeldenummer: PCT/EP2008/009528
(87) Internationale Veröffentlichungsnummer: WO 2009/071165

(56) Entgegenhaltungen:
- EP-A- 0 342 561
- WO-A-02/27281
- WO-A-99/36753

## Beschreibung

### Gebiet der Erfindung

Die Erfindung bezieht sich auf eine Wägevorrichtung gemäß Anspruch 1.

Die Erfindung bezieht sich weiter auf ein Verfahren gemäß Anspruch 8.

### Stand der Technik

Derartige Wägevorrichtungen und Verfahren werden diskutiert in dem Artikel Rauchschwalbe, U.: "Digitale Wägezellen: Innovation oder Marketing-Gag?", wdm wägen dosieren mischen, Ausgabe 1, März 2007*.*

EP-A2-0 342 561, WO 99/36753 und WO 02/27281 offenbaren bekannte Wägevorrichtungen.

Industrielle Wägevorrichtungen umfassen typischerweise eine Mehrzahl von Wägezellen, die an unterschiedlichen Positionen eine Wägeplattform unterstützen. Eine auf die Wägeplattform einwirkende Gewichtskraft wird über die Krafteinleitungseinrichtung jeder Wägezelle zu deren Sensor geleitet, der einen Teilmesswert erzeugt. Eine geeignete Kombination der Teilmesswerte ergibt den Kombinationswert, der die Gewichtskraft repräsentiert, die insgesamt auf die Wägeplattform einwirkt.

Bei vielen bekannten Vorrichtungen sind die Sensoren analoge Sensoren, die an ihrem Ausgang eine analoge elektrische Spannung erzeugen. Parallelschaltung sämtlicher die Wägeplattform unterstützender analoger Wägezellen entspricht einer Summierung der Spannungen zu einer Kombinationsspannung. Die analoge Kombinationsspannung wird bei solchen Vorrichtungen typischerweise digitalisiert und als eine Folge digitaler Werte zur weiteren Verarbeitung oder Auswertung weitergeleitet.

Ein Ersatz solcher analoger Wägezellen durch digitale Wägezellen, der im Hinblick auf die Modularität des Systems und die Vermeidung störanfälliger Analogleitungen wünschenswert wäre, führt, wie in dem oben genannten Artikel ausführlich diskutiert, zu verschiedenen Schwierigkeiten. Digitale Wägezellen erzeugen zu bestimmten Messzeitpunkten digitale Messwerte. Typischerweise umfasst auch der Sensor einer digitalen Wägezelle einen oder mehrere analoge Kraftaufnehmer, wie beispielsweise Dehnmessstreifen, die eine analoge Spannung erzeugen, welche von einem Analog-Digital-Wandler (ADC) des Sensors in eine Folge einzelner digitaler Messwerte gewandelt wird, wobei jeder digitale Messwert die zum Messzeitpunkt den Kraftaufnehmer beaufschlagende Kraft repräsentiert. Um die digitalen Messwerte mehrerer Wägezellen zu kombinieren, müssen die einzelnen Werte über eine Datenkommunikationsleitung an eine Zentralsteuereinheit gesendet und dort weiter verarbeitet werden. Hierzu ist zunächst eine Aufbereitung der Messwerte zu Versandeinheiten erforderlich, die über die Datenkommunikationsleitung versendet werden können. Eine weit verbreitete Schnittstellennorm digitaler Wägezellen ist die serielle RS 485 Schnittstelle, über die die Information betreffend die Messwerte nach einem standardisierten Protokoll versendet wird. Es sind auch andere Schnittstellen- bzw. Bussysteme möglich, wobei die Aufbereitung der Messwerte zu Versandeinheiten stets in Anpassung an das verwendete Kommunikationsnetzwerk zu erfolgen hat. Anders als im analogen Fall, bei dem die Messwertkombination durch die Parallelschaltung der Zellen ohne jeglichen Zeitverzug erfolgt, ist im Fall digitaler Wägezellen die zeitliche Abstimmung der zu kombinierenden Werte von besonderer Bedeutung. Typischerweise arbeiten die digitalen Wägezellen daher synchronisiert, wobei die Synchronisierung beispielsweise durch einen Synchronisierungspuls von der Zentralsteuereinheit her erfolgt, der alle Wägezellen gleichzeitig zur Erzeugung eines digitalen Messwertes auffordert und anschließend die in den einzelnen Messzellen zwischengespeicherten Messwerte sequenziell abfragt. Die sequenziell abgefragten Messwerte werden dann in der Zentralsteuereinheit zu einem Kombinationswert verarbeitet, der dem Synchronisationszeitpunkt zugeordnet wird. Auf diese Weise entsteht in der Zentralsteuereinheit eine Folge einzelner zeitlich zugeordneter Kombinationswerte, die einen abgetasteten Verlauf der auf die Wägeplattform einwirkenden Gewichtskraft repräsentieren. Nachteilig bei diesem System ist die erhebliche Länge des Intervalls zwischen einzelnen Kombinationswerten, die mit der Anzahl der zu berücksichtigenden Wägezellen ansteigt. Dies ist nachteilig für dynamische Wägeprozesse ebenso wie für Dosiervorgänge, bei denen eine genaue und schnelle Prognostizierbarkeit des Verlaufs der auf die Wägevorrichtungen einwirkenden Gewichtskraft von wesentlicher Bedeutung ist.

Ein Verzicht auf die Synchronisierung der Messzeitpunkte kann zwar zu einer lediglich von der Geschwindigkeit der Datenkommunikationsleitung und der Zentralsteuereinrichtung abhängigen Beschleunigung der Kombinationswert-Aktualisierung führen; allerdings liegen dann jedem Kombinationswert Einzel-Messwerte zugrunde, die zu unterschiedlichen Messzeitpunkten aufgenommen wurden, was insbesondere bei dynamischen Prozessen zu einer erheblichen Ungenauigkeit des Messergebnisses führt.

Der oben genannte Artikel schlägt eine wenigstens teilweise Rückkehr zu analogen Wägezellen vor. Insbesondere wird vorgeschlagen, die analogen Signale zur Vermeidung von Störungen über eine kurze Analogleitungsstrecke zu einem mehrkanaligen ADC zu leiten, der die analogen Eingangssignale auf allen Kanälen synchron digitalisiert und die erzeugten Digitalwerte kombiniert. Nachteilig bei diesem Konzept ist der Verlust der Modularität, die durch die Einführung der digitalen Wägezellen gewonnen wurde, und die Wiedereinführung analoger Leitungsabschnitte mit ihren bekannten Störungs- und Kalibrierungsproblemen.

### Aufgabenstellung

Es ist die Aufgabe der vorliegenden Erfindung, eine Wägevorrichtung und ein Verfahren zur Verfügung zu stellen, die es erlauben, bei einer Wägevorrichtung mit digitalen Wägezellen ein die einwirkende Gewichtskraft schnell, genau und störungsfrei prognostizierbar repräsentierendes Ergebnis zu erzielen.

### Darlegung der Erfindung

Diese Aufgabe wird in Verbindung mit den Merkmalen des Anspruchs 1 gelöst.

Die Aufgabe wird weiter in Verbindung mit den Merkmalen des Anspruchs 8 gelöst.

Kern der Erfindung ist es, einerseits von dem Zwang zur synchronen Erfassung der zu kombinierenden Messwerte abzuweichen, aber andererseits die Kombination von zu unterschiedlichen Zeitpunkten erfassten Messwerten zu vermeiden. Hierzu werden die Messwerte für jede Wägezelle als Wertepaare, umfassend den eigentlichen Messwert und den zugehörigen Messzeitpunkt, behandelt und der Verlauf der tatsächlich in die Messzelle eingeleiteten Kraft wird durch Interpolation und/oder Extrapolation sehr genau abgeschätzt bzw. prognostiziert. Die Abschätzung erfolgt z.B. auf Basis bekannter Anpassungs-Verfahren (fitting) unter Zugrundelegung eines oder mehrerer Modelle für den Kraftverlauf der einzelnen Wägezellen und/oder für den Gesamtkraftverlauf. Dem Fachmann sind derartige Verfahren als solche sowie hinsichtlich ihrer Vorzüge, Nachteile und Genauigkeiten im Einzelfall wohlbekannt. Die Abschätzung liefert die geschätzten Verläufe der in jede einzelne Wägezelle eingeleiteten Kraft als Funktion der Zeit. Die abgeschätzten Funktionen werden in der Regel für jede Wägezelle auf anderen Stützwerten, d.h. auf Messungen, die zu unterschiedlichen Zeitpunkten durchgeführt wurden, basieren. Der Kombinationswert, der die insgesamt auf die Wägevorrichtung einwirkende Gewichtskraft repräsentiert, kann zu jedem beliebigen Zeitpunkt aus den abgeschätzten Kraftverläufen abgeleitet werden, indem diejenigen Schätzwerte miteinander kombiniert werden, die in den geschätzten Kraftverläufen aller Wägezellen einem gemeinsamen, interessierenden Wägezeitpunkt entsprechen. Die Kombination erfolgt typischerweise durch Addition der entsprechenden Schätzwerte. Grundsätzlich sind jedoch auch andere Kombinationsverfahren denkbar, wenn beispielsweise spezielle Anordnungen oder Auslegungen der einzelnen Wägezellen eine solche von der einfachen Addition abweichende Kombination erfordern. Die Ermittlung des Kombinationswertes ist unabhängig davon, ob der Wägezeitpunkt einem tatsächlichen Messzeitpunkt einer oder mehrerer Wägezellen entspricht.

Der Vorteil der vorliegenden Erfindung liegt darin, dass unabhängig von der Aktualisierungsrate der Messwerte und ohne die Notwendigkeit einer synchronisierten Messwerterfassung eine grundsätzlich beliebig schnelle Ausgabe sehr genauer Kombinationswerte ermöglicht wird.

Vorteilhafte Ausführungsformen der Erfindung sind Gegenstand der abhängigen Ansprüche.

Bei einer bevorzugten Ausführungsform der Erfindung ist vorgesehen, dass die Zentralsteuereinheit aus einer Mehrzahl von Kombinationswerten einen zeitlichen Verlauf der die Wägevorrichtung beaufschlagenden Gewichtskraft abschätzt und einen zukünftigen Zeitpunkt des Erreichens einer Ziel-Gewichtskraft prognostiziert. Diese Ausführungsform eignet sich besonders zur Durchführung von Dosiervorgängen. Wie erwähnt, kann die Abschätzung der Kraftverläufe nicht nur durch Interpolation zwischen bestehenden Stützwerten sondern auch als Extrapolation durchgeführt werden, die sich auf zu erwartende Kraftverläufe bezieht. Dies ermöglicht die Vorhersage zukünftiger Kombinationswerte oder durch umgekehrte Berechnung die Ermittlung eines zukünftigen Zeitpunktes, zu dem eine erwünschte Gewichtskraft erreicht wird. Kenntnis dieses Zeitpunktes erlaubt es, mit einer Totzeit behaftete Stellelemente einer Dosiervorrichtung rechtzeitig anzusteuern, um den Dosiervorgang mit Erreichen einer Ziel-Gewichtskraft zu beenden.

Günstigerweise dient als Zentralsteuereinheit die Datenverarbeitungseinrichtung einer der Wägezellen. Moderne Wägezellen sind mit sehr kleinen aber leistungsfähigen Mikroprozessoren ausgestattet, die neben ihrer eigentlichen Aufgabe, nämlich der Vorverarbeitung und Aufbereitung der Messwerte ohne Schwierigkeiten zusätzliche Aufgaben, wie beispielsweise die oben erläuterten Abschätzungen sowie die Ermittlung des Kombinationswertes, durchführen können. Wird eine solche, ohnehin vorhandene Datenverarbeitungseinrichtung als "Master" oder "Zentralsteuereinheit" verwendet, kann dadurch auf ein gesondertes Gerät verzichtet und somit Kosten eingespart werden.

Wie bereits einleitend erwähnt, basieren typische Wägezellen auf einer analogen Erfassung der eingeleiteten Kraft und einer anschließenden Digitalisierung mittels eines ADC. Der Sensor einer Wägezelle umfasst daher typischerweise einen Kraftaufnehmer, der ein der eingeleiteten Kraft entsprechendes, elektrisches Analogsignal erzeugt, und einen Analog-Digital-Wandler, der zu den Messzeitpunkten die dem Analogsignal entsprechenden, digitalen Messwerte erzeugt. Allerdings ist die vorliegende Erfindung nicht auf derartige Wägezellen beschränkt. Auch unmittelbar digital messende Systeme sind ohne Weiteres einsetzbar.

Bei der bevorzugten Ausführungsform der Erfindung sind die Zeitbestimmungsmittel Teil der Datenverarbeitungseinrichtung jeder Wägezelle. Dies bietet sich an, da typische Datenverarbeitungseinrichtungen ohnehin über einen Taktgeber verfügen, der als Zeitbestimmungsmittel im Sinne der vorliegenden Erfindung genutzt werden kann. Beispielsweise ist es möglich, dass zur Bestimmung eines einen Messzeitpunkt repräsentierenden Zeitwertes eine Zeitdifferenz zwischen einem von der Zentralsteuereinheit an die Wägezelle gesendeten Start-Steuersignal und dem Messzeitpunkt bestimmt wird. So können beispielsweise die einzelnen Messzellen sequenziell von der Zentralsteuereinheit abgefragt werden, wobei jede Abfrage mit der Sendung eines Start-Steuerbefehls beginnt. Die Wägezelle führt dann eine Messung durch und bereitet die Versandeinheit als Wertepaar aus dem Messwert und einem Wert der zwischen dem Start-Steuerbefehl und der tatsächlichen Messung verstrichenen Zeit, die mit den eigenen Zeitmessmitteln erfasst wurde, auf. Aus dieser Information und der Kenntnis des Zeitpunktes des Start-Steuerbefehls kann dann die Zentralsteuereinheit den absoluten Messzeitpunkt ermitteln und der Kraftverlauf-Abschätzung zugrunde legen.

Bei dieser Ausführungsform kann die sequenzielle Abfrage der Wägezellen auch verschachtelt erfolgen, indem etwa eine Messzelle durch Versendung des Start-Steuerbefehls zur Messung angestoßen wird und die Zentralsteuereinheit mit anderen Wägezellen kommuniziert, während die erstgenannte Wägezelle die Erzeugung und Aufbereitung des Messwertes durchführt. Die Versendung der Versandeinheit kann dann erfolgen, wenn die Zentralsteuereinheit zu der ersten Wägezelle zurückkehrt.

Alternativ können die Zeitmessmittel aller Wägezellen auch miteinander synchronisiert sein. Dann bedarf es keiner Synchronisations-Kommunikation zwischen der Zentralsteuereinheit und den Wägezellen, da die Relation der von unterschiedlichen Wägezellen stammenden Zeitwerte aufgrund der Wägezellen-Synchronisation stets korrekt ist.

Bei einer grundsätzlich anderen Ausführungsform der Erfindung sind die Zeitbestimmungsmittel Teil der Zentralsteuereinheit. Bei dieser Ausführungsform muss die Zentralsteuereinheit jeweils die Messung in den Wägezellen anstoßen und den tatsächlichen Messzeitpunkt aus einer bekannten Reaktionszeit der Wägezelle ermitteln. Diese Variante ist vorzugsweise bei Echtzeit-fähigen Systemen einsetzbar.

### Kurzbeschreibung der Zeichnungen

Weitere Merkmale und Vorteile der Erfindung ergeben sich aus der nachfolgenden, speziellen Beschreibung und den Zeichnungen.

Es zeigen:
- Figur 1:: eine schematische Darstellung einer speziellen Anwendung der vorliegenden Erfindung.
- Figur 2:: ein Diagramm zur Verdeutlichung der vorliegenden Erfindung.

### Beschreibung bevorzugter Ausführungsformen

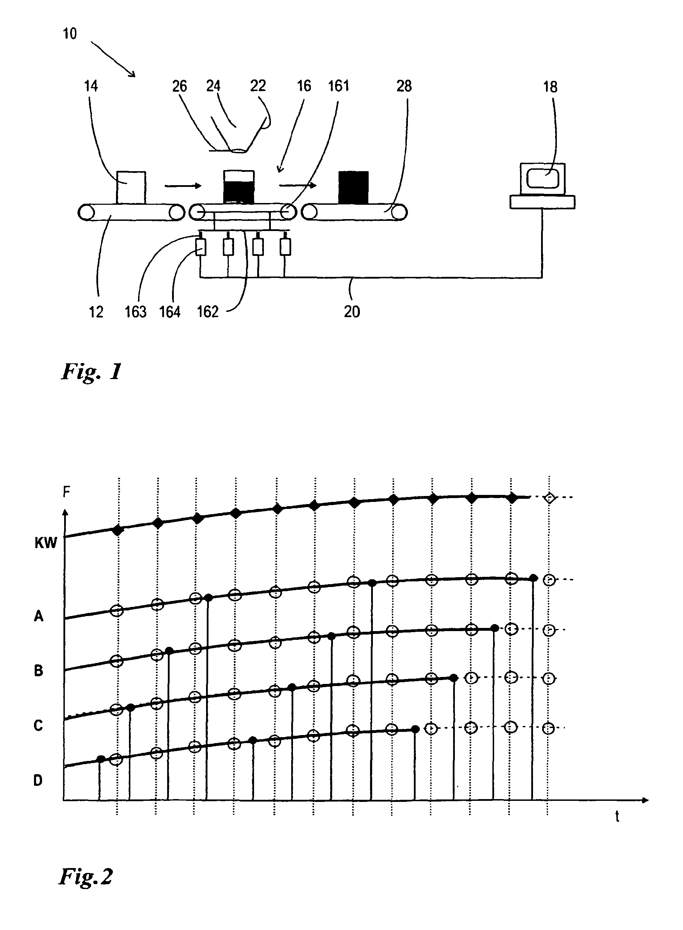

Figur 1 zeigt schematisch eine Dosiervorrichtung 10, die die vorliegende Erfindung in vorteilhafter Weise einsetzt. Mittels eines Transportsystems, z. B. eines Laufbandes 12 werden leere Behälter 14 zu einer Wägestation 16 transportiert, die einen Laufbandabschnitt 161 aufweist, der auf einer Wägeplattform 162 angeordnet ist. Die Wägeplattform 162 wird von Krafteinleitungshebeln 163 einer Mehrzahl von digitalen Wägezellen 164 gestützt. Im vorliegenden Fall sind vier Wägezellen 164 dargestellt. In praktischen Anwendungen können mehr oder weniger Wägezellen verwendet werden und ihre Anordnung kann an die speziellen Erfordernisse des konkreten Anwendungsfalls angepasst sein. Die Wägezellen 164 sind untereinander und mit einer externen Zentralsteuereinheit 18 über eine Datenkommunikationsleitung 20 verbunden. Jede Wägezelle umfasst in nicht dargestellter, dem Fachmann jedoch bekannter Weise einen Sensor und eine Datenverarbeitungseinrichtung, insbesondere einen Mikroprozessor. Die Schnittstellen zwischen den Wägezellen 164, insbesondere deren Mikroprozessoren, und der Datenkommunikationsleitung 20 sind bevorzugt als RS 485 Schnittstellen ausgebildet, wobei jedoch auch andere Arten von Schnittstellen- bzw. Bussystemen einsetzbar sind.

Ein auf den Bandabschnitt 161 transportierter Behälter 14 wird bei der dargestellten Ausführungsform von einer Befüllanlage 22 mit einem Füllgut 24 befüllt, wobei der Füllverlauf durch Überwachung der auf die Wägevorrichtung 16 insgesamt wirkenden Gewichtskraft geregelt wird. Gegen Ende des Befüllvorgangs wird eine Verschlussvorrichtung 26 über die Zentralsteuereinheit 18 angesteuert, sodass die Befüllung mit Erreichen einer Ziel-Füllmenge beendet und der Behälter 14 über ein Abtransportband 28 abtransportiert werden kann. Das Erreichen der Ziel-Füllmenge entspricht dem Erreichen einer Ziel-Gewichtskraft, die insgesamt auf die Wägeplattform 162 einwirkt. Da die Ansteuerung des Verschlusselementes 26 nur mit einer unvermeidbaren, zeitlichen Verzögerung zu dem tatsächlichen Ende der Befüllung führt, ist eine zuverlässige Prognose über den Verlauf der auf die Wägeplattform 162 einwirkenden Gewichtskraft für derartige Dosiervorgänge wichtig.

Andere Anwendungen der vorliegenden Erfindung umfassen auch dynamische Wägungen, wie beispielsweise Paketwägungen auf Förderanlagen oder Wägungen von Kraftfahrzeugen beim Überfahren einer in die Straße integrierten Wägeplattform.

Figur 2 veranschaulicht in Form eines vereinfachten Diagramms die wesentlichen Gedanken der vorliegenden Erfindung im Zusammenhang mit einer Dosiervorrichtung gemäß Figur 1. Das Diagramm zeigt fünf Graphen, die jeweils eine Kraft F als Funktion der Zeit t darstellen. Die Darstellung ist rein schematisch und nicht maßstabsgerecht zu verstehen. Die mit A, B, C, D bezeichneten Graphen repräsentieren die Kräfte, die in vier eine gemeinsame Wägeplattform 162 unterstützende, digitale Wägezellen 164 eingeleitet werden. Der mit KW bezeichnete Graph zeigt den Verlauf der insgesamt auf die Wägeplattform 162 einwirkenden Gewichtskraft, die aus Kombinationswerten von Werten der Kraftverläufe A-D ermittelt wird. Die einzelnen Wägezellen 164 liefern zu unterschiedlichen Zeitpunkten digitale Messwerte. Diese Zeitpunkte sind in dem Diagramm von Figur 2 als ausgefüllte Kreise dargestellt. Erfindungsgemäß werden die Graphen A-D individuell und unabhängig voneinander als Abschätzungen auf Basis dieser Messwerte, die als Stützwerte der Abschätzung dienen, ermittelt. Die Abschätzung der Graphen A-D erfolgt durch Interpolation zwischen den Stützstellen (durchgezogene Linien) bzw. Extrapolation für zeitliche Bereiche nach dem aktuell letzten Messwert der betreffenden Wägezelle 164 (gestrichelte Linien). Zur Ermittlung der Gesamtgewichtskraft, d.h. des Graphen KW, werden Schätzwerte aller vier Graphen A-D, die einem gemeinsamen Zeitpunkt zuzuordnen sind, in geeigneter Weise, insbesondere durch Addition miteinander kombiniert. Diese Schätzwerte sind in Figur 2 als hohle Kreise dargestellt; ihr zeitlicher Zusammenhang wird durch die punktierten Linien veranschaulicht. Die Kombination der einem gemeinsamen Zeitpunkt zugeordneten Schätzwerte aller vier Wägezellen 164 führt zu einem als ausgefüllte Raute dargestellten Schätzwert für die Gesamtgewichtskraft, d.h. zu einem geschätzten Kombinationswert. Die Folge geschätzter Kombinationswerte kann von der Zentralsteuereinheit 18 als ständig aktualisiertes Gesamt-Messergebnis ausgegeben werden.

Wie aus Figur 2 deutlich ersichtlich, ist es nicht erforderlich, dass tatsächliche Messwerte in die Berechnung der Kombinationswerte eingehen, obwohl dies nicht ausgeschlossen ist, wenn der Zeitpunkt eines zu ermittelnden Kombinationswertes mit einem Messzeitpunkt zusammenfällt. Dies ist bei praktischen Anwendungen jedoch nicht die Regel. Wie ebenfalls aus Figur 2 ersichtlich, können Kombinationswerte aus Schätzwerten ermittelt werden, die rein auf Interpolation, teilweise auf Interpolation und teilweise auf Extrapolation oder ganz auf Extrapolation beruhen. Der letztgenannte Fall führt zu dem im Graphen KW mit einer hohlen Raute gekennzeichneten Kombinationswert. Dieser repräsentiert einen prognostizierten Wert der auf die Wägeplattform 162 einwirkenden Gesamt-Gewichtskraft. Dieser Wert kann auf unterschiedliche Weisen ermittelt werden: zum einen mit dem oben beschriebenen Verfahren der Kombination extrapolierter Werte aus den geschätzten Verläufen A-D oder zum anderen mit einer Extrapolation des Verlaufs von KW. Welche Variante im Einzelfall zu den genaueren Ergebnissen führt, kann von dem konkreten Aufbau der gesamten Vorrichtung sowie dem tatsächlichen Verlauf des Dosiervorgangs abhängig sein und ist vom Fachmann in Ansehung dieser Einzelheiten zu wählen.

Zur Durchführung der Abschätzung stehen dem Fachmann grundsätzlich sämtliche bekannte und noch zu entwickelnde Abschätzungsverfahren zur Verfügung. Gut bewährt hat sich beispielsweise die lineare Interpolation bzw. Extrapolation, die sich durch besonders geringen Berechnungsaufwand auszeichnet und insbesondere bei kurzen Abständen der einzelnen Messpunkte eine hinreichende Genauigkeit ergibt. Eine bessere Genauigkeit auf Kosten eines höheren Berechnungsaufwandes liefern Interpolationen und Extrapolationen zweiter und höherer Ordnung. Beispielsweise sind die als Spline-Approximation bekannten Verfahren einsetzbar. Auch besteht die Möglichkeit, Anpassungen an bestimmte Kurvenmodelle vorzunehmen. Dieses Verfahren bietet sich insbesondere dann an, wenn die zeitlichen Kraftverläufe, d.h. die Kraftverläufe in den einzelnen Wägezellen und/oder der Kraftverlauf der Gesamt-Gewichtskraft, theoretisch gut bekannt sind, wie dies beispielsweise bei automatisierten Dosiervorgängen oder bei Kraftfahrzeugwagen, die beispielsweise von baugleichen Lkw eines Unternehmens mit ähnlicher Geschwindigkeit überfahren werden, der Fall sein kann. In diesen Fällen kann eine besonders hohe Genauigkeit der Abschätzung mit vergleichsweise geringem Rechenaufwand erreicht werden, indem die abgeschätzten Kraftverläufe beispielsweise durch Minimierung mittlerer Fehlerquadrate an parametrisierte Modellkurven angepasst werden. Die konkrete Wahl des Abschätzungsverfahrens ist jedoch für die vorliegende Erfindung von nachgeordneter Bedeutung.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten anhand gegeben. Insbesondere kann die Anzahl und Bauweise der Wägezellen, das konkret verwendete Abschätzungsverfahren, der mechanische Aufbau des die Erfindung einsetzenden Wägesystems, die Technik der Datenkommunikation und die Definition der erfassten bzw. erzeugten Zeitwerte vom Fachmann an die Anforderungen des jeweiligen Einzelfalls angepasst werden.

### Bezugszeichenliste

- 10: Dosiervorrichtung
- 12: Förderband
- 14: Behälter
- 16: Wägevorrichtung
- 161: Förderband
- 162: Wägeplattform
- 163: Krafteinleitungshebel
- 164: Wägezelle
- 18: Zentralsteuereinheit
- 20: Datenkommunikationsleitung
- 22: Dosiertrichter
- 24: Füllgut
- 26: Verschlussvorrichtung
- 28: Abtransportband

## Patentansprüche

1. Wägevorrichtung (16) mit einer Mehrzahl digitaler Wägezellen (164), jeweils umfassend
- einen mit einer Krafteinleitungseinrichtung (163) verbundenen Sensor, der jeweils einen digitalen, einer eingeleiteten Kraft zu einem Messzeitpunkt entsprechenden Messwert erzeugt,
- eine Datenverarbeitungseinrichtung, welche die digitalen Messwerte zu Versandeinheiten, die über eine Datenkommunikationsleitung (20) versendbar sind, aufbereitet und die Versandeinheiten an eine mit allen Wägezellen verbundene Zentralsteuereinheit (18) zur Auswertung der Versandeinheiten sendet,
wobei die zentralsteuereinheit (18) auf Basis der von verschiedenen Wägezellen (164) stammenden Versandeinheiten einen digitalen Kombinationswert berechnet, der eine die Wägevorrichtung (16) zu einem Wägezeitpunkt beaufschlagende Gewichtskraft repräsentiert,
**dadurch gekennzeichnet,**
**dass** die Aufbereitung der Messwerte zu Versandeinheiten eine Paarbildung je eines Messwertes mit einem mittels Zeitbestimmungsmitteln bestimmten Zeitwert, welcher den zugehörigen Messzeitpunkt repräsentiert, umfasst und dass die Zentralsteuereinheit (18) aus einer Mehrzahl solcher einer einzelnen Wägezelle (164) zugeordneter Paare einen zeitlichen Verlauf der in diese Wägezelle (164) eingeleiteten Kraft abschätzt und den Kombinationswert durch Kombination von solchen Schätzwerten für verschiedene Wägezellen (164) erzeugt, die in geschätzten Kraftverläufen jeweils dem Wägezeitpunkt entsprechen.

2. Wägevorrichtung nach Anspruch 1,
**dadurch gekennzeichnet,**
**dass** die Zentralsteuereinheit (18) aus einer Mehrzahl von Kombinationswerten einen zeitlichen Verlauf der die Wägevorrichtung (16) beaufschlagenden Gewichtskraft abschätzt und einen zukünftigen Zeitpunkt des Erreichens einer Ziel-Gewichtskraft prognostiziert.

3. Wägevorrichtung nach einem der vorangehenden Ansprüche,
**dadurch gekennzeichnet,**
**dass** als Zentralsteuereinheit die Datenverarbeitungseinrichtung einer der Wägezellen dient.

4. Wägevorrichtung nach einem der vorangehenden Ansprüche
**dadurch gekennzeichnet,**
**dass** der Sensor einer Wägezelle (164) einen Kraftaufnehmer, der ein der eingeleiteten Kraft entsprechendes, elektrisches Analogsignal erzeugt, und einen Analog-Digital-Wandler, der zu den Messzeitpunkten die dem Analogsignal entsprechenden, digitalen Messwerte erzeugt, umfasst.

5. Wägevorrichtung nach einem der vorangehenden Ansprüche,
**dadurch gekennzeichnet,**
**dass** die Zeitbestimmungsmittel Teil der Datenverarbeitungseinrichtung jeder Wägezelle (164) sind und zur Bestimmung eines einen Messzeitpunkt repräsentierenden Zeitwertes eine Zeitdifferenz zwischen einem von der Zentralsteuereinheit (18) an die Wägezelle (164) gesendeten Start-Steuersignal und dem Messzeitpunkt bestimmen.

6. Wägevorrichtung nach einem der Ansprüche 1 bis 4,
**dadurch gekennzeichnet,**
**dass** die Zeitbestimmungsmittel Teil der Datenverarbeitungseinrichtung jeder Wägezelle (164) sind und die Zeitbestimmungsmittel aller Wägezellen (164) miteinander synchronisiert sind.

7. Wägevorrichtung nach einem der Ansprüche 1 bis 4,
**dadurch gekennzeichnet,**
**dass** die Zeitbestimmungsmittel Teil der Zentralsteuereinheit (18) sind.

8. Verfahren zur Bestimmung eines digitalen Kombinationswertes, der eine eine Wägevorrichtung (16) zu einem Wägezeitpunkt beaufschlagende Gewichtskraft repräsentiert, umfassend die folgenden Schritte:
- Anfordern, mittels einer Zentralsteuereinheit (18), je eines digitalen Messwertes von einer Mehrzahl von Wägezellen (164), die jeweils einen mit einer Krafteinleitungseinrichtung (163) verbundenen Sensor und eine Datenverarbeitungseinrichtung aufweisen,
- in jeder der Mehrzahl von Wägezellen:
▪ Erzeugen, mittels des Sensors, eines digitalen, einer eingeleiteten Kraft zu einem Messzeitpunkt entsprechenden Messwertes,
• Aufbereiten, mittels der Datenverarbeitungseinrichtung, des digitalen Messwertes zu einer über eine Datenkommunikationsleitung (20) versendbaren Versandeinheit und
▪ Senden, mittels der Datenverarbeitungseinrichtung, der Versandeinheit zur Auswertung an die Zentralsteuereinheit (18),
- Berechnen, mittels der Zentralsteuereinheit (18), des digitalen Kombinationswertes auf Basis der von verschiedenen Wägezellen (164) stammenden Versandeinheiten,
**dadurch gekennzeichnet,**
**dass** der Schritt des Aufbereitens eines Messwertes zu einer Versandeinheit eine Paarbildung des Messwertes mit einem mittels Zeitbestimmungsmitteln bestimmten Zeitwert, welcher den zugehörigen Messzeitpunkt repräsentiert, umfasst,
**dass** der Schritt des Berechnens des digitalen Kombinationswertes ein Abschätzen zeitlicher Verläufe der in einzelne Wägezellen (164) eingeleiteten Kräfte aus einer Mehrzahl solcher Paare umfasst und
**dass** der Schritt des Erzeugens des Kombinationswertes ein Kombinieren von solchen Schätzwerten für verschiedene Wägezellen (164), die in den geschätzten Kraftverläufen jeweils dem Wägezeitpunkt entsprechen, umfasst.

9. Verfahren nach Anspruch 8,
**gekennzeichnet durch**
den weiteren Schritt des Abschätzens eines zeitlichen Verlaufs der die Wägevorrichtung (164) beaufschlagenden Gewichtskraft aus einer Mehrzahl von Kombinationswerten und den Schritt des Prognostizierens eines zukünftigen Zeitpunktes des Erreichens einer Ziel-Gewichtskraft mittels der Zentralsteuereinheit.

10. Verfahren nach einem der Ansprüche 8 bis 9,
**dadurch gekennzeichnet,**
**dass** als Zentralsteuereinheit die Datenverarbeitungseinrichtung einer der Wägezellen dient.

11. Verfahren nach einem der Ansprüche 8 bis 10,
**dadurch gekennzeichnet,**
**dass** der Sensor einer Wägezelle (164) einen Kraftaufnehmer, der ein der eingeleiteten Kraft entsprechendes, elektrisches Analogsignal erzeugt, und einen Analog-Digital-Wandler, der zu den Messzeitpunkten die dem Analogsignal entsprechenden, digitalen Messwerte erzeugt, umfasst.

12. Verfahren nach einem der Ansprüche 8 bis 11,
**dadurch gekennzeichnet,**
**dass** die Zeitbestimmungsmittel Teil der Datenverarbeitungseinrichtung jeder Wägezelle (164) sind und zur Bestimmung eines einen Messzeitpunkt repräsentierenden Zeitwertes eine Zeitdifferenz zwischen einem von der Zentralsteuereinheit (18) an die Wägezelle (164) gesendeten Start-Steuersignal und dem Messzeitpunkt bestimmen.

13. Verfahren nach einem der Ansprüche 8 bis 11,
**dadurch gekennzeichnet,**
**dass** die Zeitbestimmungsmittel Teil der Datenverarbeitungseinrichtung jeder Wägezelle sind und die Zeitbestimmungsmittel aller Wägezellen (164) miteinander synchronisiert sind.

14. Verfahren nach einem der Ansprüche 8 bis 11,
**dadurch gekennzeichnet,**
**dass** die Zeitbestimmungsmittel Teil der Zentralsteuereinheit (18) sind.

## Claims

1. Weighing device (16) with a plurality of digital weighing cells (164), each comprising
- a sensor, which is connected with a force introduction device (163) and which generates a respective digital measurement value corresponding with an introduced force at a measurement instant and
- a data processing device, which processes the digital measurement values to form transmission units transmissible by way of a data communication line (20) and transmits the transmission units to a central control unit (18), which is connected with all weighing cells, for evaluation of the transmission units,
wherein the central control unit (18) on the basis of the transmission units originating from different weighing cells (164) calculates a digital combination value representing a weight force acting on the weighing device (16) at a weighing instant,
**characterised in that**
the processing of the measurement values to form transmission units comprises pair formation of a respective measurement value with a time value, which is determined by way of time determining means and which represents the associated measurement instant, and the central control unit (18) from a plurality of such pairs associated with an individual weighing cell (164) estimates a time plot of the force introduced into this weighing cell (164) and generates the combination value by combination of such estimated values for different weighing cells (164), which estimated values in estimated force plots each correspond with the weighing instant.

2. Weighing device according to claim 1, **characterised in that** the central control unit (18) from a plurality of combination values estimates a time plot of the weight force acting on the weighing device (16) and prognosticises a future instant of attainment of a target weight force.

3. Weighing device according to one of the preceding claims, **characterised in that** the data processing device of one of the weighing cells serves as central control unit.

4. Weighing device according to any one of the preceding claims, **characterised in that** the sensor of a weighing cell (164) comprises a force pick-up, which generates an electrical analog signal corresponding with the introduced force, and an analog-to-digital converter, which at the measurement instants generates the digital measurement values corresponding with the analog signal.

5. Weighing device according to any one of the preceding claims, **characterised in that** the time determining means are part of the data processing device of each weighing cell (164) and for determination of a time value representing a measurement instant determine a time difference between a start control signal, which is transmitted by the central control unit (18) to the weighing cell (164), and the measurement instant.

6. Weighing device according to any one of claims 1 to 4, **characterised in that** the time determining means are part of the data processing device of each weighing cell (164) and the time determining means of all weighing cells (164) are synchronised with one another.

7. Weighing device according to any one of claims 1 to 4, **characterised in that** the time determining means are part of the central control unit (18).

8. Method of determining a digital combination value which represents a weight force acting on a weighing device (16) at a weighing instant, comprising the following steps
- requesting, by means of a central control unit (18), a respective digital measurement value from a plurality of weighing cells (164), which each comprise a sensor, which is connected with a force introduction device (163), and a data processing device,
- in each of the plurality of weighing cells:
- generating, by means of the sensor, a digital measurement value corresponding with an introduced force at a measurement instant,
- processing, by means of the data processing device, the digital measurement value to form a transmission unit transmissible by way of a data communication line (20) and
- transmitting, by means of the data processing device, the transmission unit for evaluation to the central control unit (18),
- calculating, by means of the central control unit (18), the digital combination value on the basis of the transmission units originating from different weighing cells (164),
**characterised in that** the step of processing a measurement value to form a transmission unit comprises a pair formation of the measurement value together with a time value which is determined by way of time determining means and which represents the associated measurement instant,
the step of calculating the digital combination value comprises estimation of time plots of the forces, which are introduced into individual weighing cells (164), from a plurality of such pairs and
the step of generating the combination value comprises combining such estimated values for different weighing cells (164), which estimated values in the estimated force plots each correspond with the weighing instant.

9. Method according to claim 8, **characterised by** the further step of estimating a time plot of the weight force, which acts on the weighing device (164), from a plurality of combination values and the step of prognosticisation by means of the central control unit of a future instant of attainment of a target weight force.

10. Method according to one of claims 8 and 9, **characterised in that** the data processing device of one of the weighing cells serves as central control unit.

11. Method according to any one of claims 8 to 10, **characterised in that** the sensor of a weighing cell (164) comprises a force pick-up which generates an electrical analog signal corresponding the introduced force, and an analog-to-digital converter, which at the measurement instants generates the digital measurement values corresponding with the analog signal.

12. Method according to any one of claims 8 to 11, **characterised in that** the time determining means are part of the data processing device of each weighing cell (164) and for determination of a time value representing a measurement instant determine a time difference between a start control signal, which is transmitted by the central control unit (18) to the weighing cell (164), and the measurement instant.

13. Method according to any one of claims 8 to 11, **characterised in that** the time determining means are part of the data processing device of each weighing cell and the time determining means of all weighing cells (164) are synchronised with one another.

14. Method according to any one of claims 8 to 11, **characterised in that** the time determining means are part of the central control unit (18).

## Revendications

1. Dispositif de pesage (16) comprenant une pluralité de cellules de pesage (164) numériques, comprenant respectivement
- un capteur relié à un système induisant une force (163), lequel génère respectivement une valeur de mesure numérique, correspondant à une force induite à un moment de mesure,
- un système de traitement de données, qui prépare les valeurs de mesure numériques pour des unités d'envoi, lesquelles peuvent être envoyées par l'intermédiaire d'une ligne de communication de données (20), et qui envoie les unités d'envoi à une unité de commande centrale (18) reliée à toutes les cellules de pesage afin d'analyser les unités d'envoi,
sachant que l'unité de commande centrale (18) calcule, sur la base des unités d'envoi provenant des différentes cellules de pesage (164), une valeur de combinaison numérique, qui représente une force de poids exerçant une contrainte sur le dispositif de pesage (16) à un moment de pesage,
**caractérisé**
**en ce que** la préparation des valeurs de mesure pour des unités d'envoi comprend une formation de paire avec respectivement une valeur de mesure et avec une valeur temporelle déterminée au moyen de moyens de détermination de temps, laquelle représente le moment de mesure associé, et en ce que l'unité de commande centrale (18) estime, à partir d'une multitude de paires de ce type associées à une cellule de pesage (164) individuelle, une variation dans le temps de la force induite dans ladite cellule de pesage (164) et génère la valeur de combinaison en combinant des valeurs estimées de ce type pour les différentes cellules de pesage (164), qui correspondant, dans les variations de force évaluées, respectivement au moment de pesage.

2. Dispositif de pesage selon la revendication 1,
**caractérisé**
**en ce que** l'unité de commande centrale (18) estime, à partir d'une pluralité de valeurs de combinaison, une variation dans le temps de la force de poids exerçant une contrainte sur le dispositif de pesage (16) et anticipe un moment ultérieur d'obtention d'une force de poids cible.

3. Dispositif de pesage selon l'une quelconque des revendications précédentes,
**caractérisé**
**en ce que** le système de traitement de données d'une des cellules de pesage fait office d'unité de commande centrale.

4. Dispositif de pesage selon l'une quelconque des revendications précédentes,
**caractérisé**
**en ce que** le capteur d'une cellule de pesage (164) comprend un système absorbeur de force, qui génère un signal analogique électrique correspondant à la force induite, et un convertisseur analogique-numérique, qui génère, à des moments de mesure, des valeurs de mesure numériques correspondant au signal analogique.

5. Dispositif de pesage selon l'une quelconque des revendications précédentes,
**caractérisé**
**en ce que** les moyens de détermination de temps font partie du système de, traitement de données de chaque cellule de pesage (164) et déterminent une différence temporelle entre un signal de commande de démarrage envoyé par l'unité de commande centrale (18) à la cellule de pesage (164) et le moment de mesure afin de déterminer une valeur temporelle représentant un moment de mesure.

6. Dispositif de pesage selon l'une quelconque des revendications 1 à 4,
**caractérisé**
**en ce que** les moyens de détermination de temps font partie du système de traitement de données de chaque cellule de pesage (164),
et **en ce que** les moyens de détermination de temps de toutes les cellules de pesage (164) sont synchronisés entre eux.

7. Dispositif de pesage selon l'une quelconque des revendications 1 à 4,
**caractérisé**
**en ce que** les moyens de détermination de temps font partie de l'unité de commande centrale (18).

8. Procédé servant à déterminer une valeur de combinaison numérique, qui représente une force de poids exerçant une contrainte sur un dispositif de pesage (16) à un moment de pesage, comprenant les étapes suivantes consistant à :
- demander, au moyen d'une unité de commande centrale (18), respectivement une valeur de mesure numérique d'une multitude de cellules de pesage (164), qui présentent respectivement un capteur relié à un système induisant une force (163) et un système de traitement de données ;
- dans chaque cellule de pesage de la multitude de cellules de pesage :
-- générer, au moyen du capteur, une valeur de mesure numérique correspondant à une force induite à un moment de mesure ;
-- préparer, au moyen du système de traitement de données, la valeur de mesure numérique pour une unité d'envoi pouvant être envoyée par l'intermédiaire d'une ligne de communication de données (20) ; et
-- envoyer, au moyen du système de traitement de données, l'unité d'envoi aux fins de l'analyse à l'unité de commande centrale (18) ;
- calculer, au moyen de l'unité de commande centrale (18), la valeur de combinaison numérique sur la base des unités d'envoi provenant des différentes cellules de pesage (164),
**caractérisé**
**en ce que** l'étape consistant à préparer une valeur de mesure pour une unité d'envoi comprend une formation de paire avec la valeur de mesure et avec la valeur temporelle déterminée au moyen des moyens de détermination de temps, laquelle valeur temporelle représente le moment de mesure associé,
en ce l'étape consistant à calculer la valeur de combinaison numérique comprend une estimation des variations dans le temps des forces induites dans diverses cellules de pesage (164) à partir d'une multitude de paires de ce type, et
**en ce que** l'étape consistant à générer la valeur de combinaison comprend une combinaison de valeurs estimées de ce type pour différentes cellules de pesage (164), qui correspondent, dans les variations de force évaluées, respectivement au moment de pesage.

9. Procédé selon la revendication 8,
**caractérisé par**
l'étape supplémentaire consistant à estimer une variation dans le temps de la force de poids exerçant une contrainte sur le dispositif de pesage (164) à partir d'une multitude de valeurs de combinaison
et l'étape consistant à anticiper un moment ultérieur d'obtention d'une force de poids cible au moyen de l'unité de commande centrale.

10. Procédé selon l'une quelconque des revendications 8 à 9,
**caractérisé**
**en ce que** le système de traitement de données d'une des cellules de pesage fait office d'unité de commande centrale.

11. Procédé selon l'une quelconque des revendications 8 à 10,
**caractérisé**
**en ce que** le capteur d'une cellule de pesage (164) comprend un système absorbeur de force, qui génère un signal analogique électrique correspondant à la force induite, et un convertisseur analogique-numérique, qui génère, aux moments de pesage, les valeurs de mesure numériques correspondant au signal analogique.

12. Procédé selon l'une quelconque des revendications 8 à 11,
**caractérisé**
**en ce que** les moyens de détermination de temps font partie du système de traitement de données de chaque cellule de pesage (164) et déterminent une différence temporelle entre un signal de commande de démarrage envoyé par l'unité de commande centrale (18) à la cellule de pesage (164) et le moment de mesure afin de déterminer une valeur temporelle représentant un moment de mesure.

13. Procédé selon l'une quelconque des revendications 8 à 11,
**caractérisé**
**en ce que** les moyens de détermination de temps font partie du système de traitement de données de chaque cellule de pesage, et
**en ce que** les moyens de détermination de temps de toutes les cellules de pesage (164) sont synchronisés entre eux.

14. Procédé selon l'une quelconque des revendications 8 à 11,
**caractérisé**
**en ce que** les moyens de détermination de temps font partie de l'unité de commande centrale (18).
